# EUROPÄISCHE PATENTSCHRIFT

(11) **EP 2 487 112 B1**
(45) Veröffentlichungstag und Bekanntmachung des Hinweises auf die Patenterteilung: **02.07.2014**
(21) Anmeldenummer: 12154144.5
(22) Anmeldetag: 07.02.2012
(51) Int. Cl.: B65B 1/32, B65B 9/20, G01G 19/387

(54) **Verfahren und Vorrichtung zum Dosieren und Verpacken von Polysiliciumbruchstücken**
Method and device for dosing and packaging polysilicon chunks
Procédé et dispositif de dosage et d'emballage de composants en polysilicium

(30) Priorität: 09.02.2011 DE 102011003875
(43) Veröffentlichungstag der Anmeldung: 15.08.2012
(73) Patentinhaber: Wacker Chemie AG, 81737 München (DE)
(72) Erfinder: Vietz, Matthias, 5230 Mattighofen (AT); Hölzlwimmer, Rainer, 84524 Neuötting (DE); Lichtenegger, Bruno, 84547 Emmerting (DE)
(74) Vertreter: Killinger, Andreas

(56) Entgegenhaltungen:
- EP-A1- 1 334 907
- EP-A1- 1 645 333
- DE-A1- 10 204 570
- DE-A1-102007 027 110
- US-A1- 2003 172 624

## Beschreibung

Die Erfindung betrifft ein Verfahren und eine Vorrichtung zum Dosieren und Verpacken von Polysiliciumbruchstücken sowie eine Dosiereinheit und eine Verpackungseinheit für eine Vorrichtung zum Dosieren und Verpacken von Polysiliciumbruchstücken.

Polysiliciumbruch wird beispielsweise mittels des Siemensverfahrens aus Trichlorsilan abgeschieden und danach idealer weise kontaminationsfrei zerkleinert. Ein Verfahren zum automatischen Brechen sowie eine entsprechende Vorrichtung sind in EP 1 645 333 A1 beschrieben.

Für Anwendungen in der Halbleiter- und Solarindustrie ist ein möglichst wenig kontaminierter Polysiliciumbruch erwünscht. Daher sollte das Material auch kontaminationsarm verpackt werden, bevor es zum Kunden transportiert wird.

Üblicherweise wird Polysilicium-Bruch für die Elektronikindustrie in 5 kg Beuteln mit einer Gewichtstoleranz von +/- max. 50 g verpackt. Für die Solarindustrie ist Polysilicium-Bruch in Beuteln mit einer Einwaage von 10 kg und einer Gewichtstoleranz von +/- max. 100 g üblich.

Schlauchbeutelmaschinen, die zur Verpackung von Siliciumbruch prinzipiell geeignet sind, sind kommerziell erhältlich. Eine entsprechende Verpackungsmaschine ist beispielsweise in DE 36 40 520 A1 beschrieben.

Bei Polysilicium-Bruch handelt es sich um ein scharfkantiges, nicht rieselfähiges Schüttgut mit einem Gewicht der einzelnen Si-Bruchstücke von bis zu 2500 g. Daher ist bei der Verpackung darauf zu achten, dass das Material die üblichen Kunststoffbeutel beim Befüllen nicht durchstößt oder im schlimmsten Fall sogar vollständig zerstört. Um dies zu verhindern, sind die kommerziellen Verpackungsmaschinen zum Zwecke der Verpackung von Polysilicium in geeigneter Weise zu modifizieren.

Mit kommerziellen Verpackungsmaschinen ist es in der Regel nicht möglich, die Reinheitsanforderungen, die an Polysilicium-Bruch gestellt werden, einzuhalten, da die üblicherweise verwendeten Verbundfolien aufgrund der chemischen Zusätze zu erhöhten Verunreinigungen des Polysilicium-Bruchs führen können.

EP 1 334 907 B1 offenbart eine Vorrichtung zum kostengünstigen vollautomatischen Transportieren, Abwägen, Portionieren, Einfüllen und Verpacken eines hochreinen Polysiliciumbruchs umfassend eine Förderrinne für den Polysiliciumbruch, eine Wägevorrichtung für den Polysiliciumbruch, welche mit einem Trichter verbunden ist, Ablenkbleche aus Silicium, eine Abfüllvorrichtung, welche aus einer hochreinen Kunststofffolie einen Kunststoffbeutel formt, umfassend einen Deionisierer, der eine statische Aufladung und damit eine Partikelverunreinigung der Kunststofffolie verhindert, eine Verschweißvorrichtung für den mit Polysiliciumbruch gefüllten Kunststoffbeutel, eine oberhalb von Förderrinne, Wägevorrichtung, Abfüllvorrichtung und Verschweißvorrichtung angebrachte Flowbox, die eine Partikelverunreinigung des Polysiliciumbruchs verhindert, ein Förderband mit einem magnetisch induktiven Detektor für den verschweißten mit Polysiliciumbruch gefüllten Kunststoffbeutel, wobei alle Bauteile, die mit dem Polysiliciumbruch in Kontakt kommen, mit Silicium armiert oder mit einem hochverschleißfestem Kunststoff verkleidet sind.

Mittel zur Portionierung des Polysiliciumbruchs sind beispielsweise eine zeitgesteuerte Förderrinne oder eine Füllhöhenbestimmung eines Vorratsbehälters oder eine Wägevorrichtung für den Polysiliciumbruch. Eine entsprechende Wägevorrichtung ist beispielsweise aus US 4,813,205 bekannt.

Die Vorrichtung gemäß EP 1 334 907 B1 soll eine kontaminationsarme Verpackung ohne Humankontakt ermöglichen. Die kontaminationsarme Verpackung soll insbesondere durch die Armierung der Einbauteile mit Silicium oder mit einem hochverschleißfesten Kunststoff bewerkstelligt werden.

Allerdings hat sich gezeigt, dass gerade die Portionierung des Silicium-Bruchs bei einem Vorgehen gemäß EP 1 334 907 B1 problematisch ist. Eine exakte Einwaage von 10 kg Polysiliciumbruch mit einer Toleranz von +/- 100 g ist mittels dieser Vorrichtung nicht möglich. Dies betrifft insbesondere Bruchstücke der Größen 50-130 mm.

Zudem erwies sich die gesamte Anordnung durch die Armierung aller Teile, die mit Silicium in Berührung kommen, mit Silicium oder Kunststoff als mechanisch wenig stabil. Der relativ hohe Verschleiß der Silicium- und Kunststoffbeschichtungen macht die Verpackungsmaschinen äußerst wartungsintensiv. DE 102 04 570 A1 offenbart, dass zur Verbesserung der Verschleißfestigkeit der Oberfläche metallischer Teile Beschichtungen mit Titancarbid oder Titannitrid geeignet sind.

DE 10 2007 027 110 A1 offenbart eine Vorrichtung zum Verpacken von polykristallinem Silicium-Bruch oder Polysiliciumgranulat, bestehend aus einer Rundläufer-, Füll-, und Schließmaschine oder einer nicht kreisförmig angeordneten Vorrichtung mit einer Befüllstation und einer Verschlussstation, in der ein PE-Beutel an einem Greifersystem aufgehängt ist, von Station zu Station in einer Taktfolge bewegt wird, dadurch gekennzeichnet, dass die Befüllstation einen frei hängenden Energieabsorber aus einem nichtmetallischen kontaminationsarmen Werkstoff umfasst, welcher vor dem Befüllen des PE-Beutels mit polykristallinem Silicium in den PE-Beutel eingeführt wird und nach dem Befüllen des PE-Beutels mit polykristallinem Silicium aus dem PE-Beutel entfernt wird und der gefüllte PE-Beutel mittels des Greifersystems in die Verschlussstation weiterbefördert wird und dort verschlossen wird.

DE 10 2007 027 110 A1 beschreibt auch ein Verfahren zur Verpackung von polykristallinem Silicium, bei dem polykristallines Silicium mittels einer Abfüllvorrichtung in einen frei hängenden, fertig geformten, Beutel gefüllt wird, wobei der gefüllte Beutel anschließend verschlossen wird, dadurch gekennzeichnet, dass der Beutel aus hochreinem Kunststoff mit einer Wanddicke von 10 bis 1000 µm besteht. Vorzugsweise wird der mit polykristallinem Silicium gefüllte, verschlossene Kunststoffbeutel in einen weiteren Kunststoffbeutel aus PE mit einer Wanddicke von 10 bis 1000 µm eingebracht und dieser zweite Kunststoffbeutel verschlossen.

DE 10 2007 027 110 A1 zufolge wird das Polysilicium vor dem Verpacken zunächst portioniert und gewogen. Dabei erfolgt die Portionierung und Einwaage des Polysilicium-Bruchs mittels eines aus dem Stand der Technik bekannten händischen oder automatischen Verfahrens. Bezüglich automatischer Portionierung ist die aus EP 1 334 907 B1 bekannte Vorrichtung genannt, die jedoch die zuvor beschriebenen Nachteile aufweist.

Um die geforderte hohe Einwaagegenauigkeit von weniger als +/-1 % für Polysilicium-Bruch für die Halbleiterindustrie zu erreichen, ist ein personalintensives händisches Verpacken der gereinigten Polysilicium-Bruchstücke in einem Reinraum der Klasse 100 notwendig. Dabei werden gereinigte Polysilicium-Bruchstücke, welche keinerlei metallische Verunreinigungen mehr an ihrer Oberfläche besitzen, mit hochreinen Handschuhen, z. B. hochreinen Textil-, PU- bzw. PE-Handschuhen, aus einer Prozessschale, in der eine Reinigung erfolgt, genommen und in einen PE-Doppelbeutel eingebracht. Beim Anfassen mit den Handschuhen steigt allerdings bedingt durch den Handschuhabrieb und das allgemeine Handling durch die Mitarbeiter der Gehalt an Kunststoff- und Metallpartikeln auf dem Polysilicium-Bruch an. Allerdings erfüllt das händische Verfahren dennoch die Reinheitsanforderungen in Bezug auf die Metalloberflächenwerte für die Elektronikindustrie.

Außerdem ist eine automatische Gewichtskorrektur vorgesehen, indem die gefüllten und verschweißten PE-Beutel nachgewogen, bei einem Über- oder Untergewicht die betreffenden Beutel ausgeschleust werden, wobei bei Beuteln mit Fehleinwaage das Gewicht händisch korrigiert, das Polysilicium ggf. erneut gereinigt und in einen neuen Beutel umgefüllt und verschweißt wird.

Alternativ wird eine Differenzwiegung der Prozessschale vor und nach dem Entleeren vorgenommen, wobei bei einer Gewichtsabweichung von +/- 50 g das Verfahren automatisch stoppt und das Bedienpersonal eine händische Korrektur durchführt. Anschließend wird der PE-Beutel befüllt.

Das Verschweißen des PE-Beutels erfolgt DE 10 2007 027 110 A1 zufolge mit einem Heißsiegelschweißgerät, bei dem der metallische Schweißdraht mit einem nichtmetallischen Werkstoff, z. B. Polytetrafluorethylen (PTFE), ummantelt ist.

Es hat sich gezeigt, dass auf diese Weise oft Schweißnähte gebildet werden, die Falten aufweisen. Dies ist insbesondere beim zweiten Beutel und bei Bruchstücken einer Größe von 50 bis 130 mm häufig der Fall. Damit sind aber ein sicheres Handling sowie ein sicherer Transport zum Kunden nicht immer gewährleistet.

Im Stand der Technik ist also oftmals eine händische Gewichtskorrektur oder sogar ein händisches Verpacken von Polysilicium vorgesehen, um die erforderlichen Einwaagetoleranzen einhalten zu können. Automatische Dosiervorrichtungen haben sich als mechanisch instabil erwiesen. Ein faltenfreies Verschweißen des zweiten Beutels wird mit den aus dem Stand der Technik bekannten Verfahren nicht erreicht.

Aus dieser Problematik ergab sich die Aufgabenstellung der Erfindung.

Die Aufgabe der Erfindung wird gelöst durch ein Verfahren zum Dosieren und Verpacken von Polysiliciumbruchstücken, wobei ein Produktstrom an Polysiliciumbruchstücken über eine Förderrinne transportiert, mittels wenigstens einen Siebs in grobe und feine Bruchstücke getrennt, mittels einer Dosierwaage abgewogen und auf ein Zielgewicht dosiert wird, über eine Abführrinne abgeführt und zu einer ersten Verpackungseinheit transportiert wird, wo die Polysiliciumbruchstücke vertikal in einen ersten, mittels eines Formgebers geformten Kunststoffbeutel gefüllt werden und dieser verschweißt wird, wobei dieser erste Kunststoffbeutel enthaltend Polysiliciumbruchstücke in einer zweiten Verpackungseinheit horizontal in einen zweiten mittels eines Formgebers geformten Kunststoffbeutel verpackt wird, der anschließend verschweißt wird, wobei das wenigstens eine Sieb und die Dosierwaage an ihren Oberflächen weinigstens teilweise ein Hartmetall umfassen und der Formgeber zum Formen des ersten und des zweiten Kunststoffbeutels jeweils eine verschleißfeste Beschichtung aufweisen, wobei die verschleißfeste Beschichtung des Formgebers jeweils ausgewählt wird aus der Gruppe bestehend aus Titannitrid, Titancarbid, Aluminiumtitannitrid und DLC.

Die Aufgabe der Erfindung wird auch gelöst durch ein Vorrichtung zum Dosieren und Verpacken von Polysiliciumbruchstücken enthaltend
a) eine Dosiereinheit für eine Vorrichtung zum Dosieren von Polysiliciumbruchstücken, umfassend eine Förderrinne, geeignet zum Befördern eines Produktstroms an Polysiliciumbruchstücken, wenigstens ein Sieb, geeignet zur Trennung des Produktstroms in grobe und feine Polysiliciumbruchstücke, eine Grobdosierrinne für grobe Polysiliciumbruchstücke und eine Feindosierrinne für feine Polysiliciumbruchstücke, eine Dosierwaage zur Bestimmung des Dosiergewichts, wobei das wenigstens eine Sieb und die Dosierwaage an ihren Oberflächen wenigstens teilweise ein Hartmetall umfassen;
b) eine erste Verpackungseinheit, , enthaltend einen Formgeber, geeignet zum Formen eines ersten Kunststoffbeutels aus einer hochreinen Kunststofffolie, sowie eine Vorrichtung zum Verschließen des ersten Kunststoffbeutel;
c) eine zweite Verpackungseinheit, enthaltend einen Formgeber, geeignet zum Formen eines zweiten Kunststoffbeutels aus einer hochreinen Kunststofffolie, sowie eine Vorrichtung zum Verschließen des zweiten Kunststoffbeutels;
wobei der Formgeber zum Formen des ersten und des zweiten Kunststoffbeutels jeweils eine verschleißfeste Beschichtung aufweist;
wobei die verschleißfeste Beschichtung des Formgebers jeweils ausgewählt wird aus der Gruppe bestehend aus Titannitrid, Titancarbid, Aluminiumtitannitrid und DLC; und wobei die erste Verpackungseinheit so angeordnet ist, dass die zu verpackenden Polysiliciumbruchstücke vertikal in den ersten geformten Kunststoffbeutel eingefüllt werden können;
und wobei die zweite Verpackungseinheit so angeordnet ist, dass der erste, verschlossene Kunststoffbeutel mit darin verpackten Polysiliciumbruchstücken horizontal in den zweiten faltenfrei geformten Kunststoffbeutel eingebracht werden kann.

Die Dosiereinheit dient dazu, Polysiliciumbruchstücke einer bestimmten Größenklasse vor dem Verpacken so exakt wie möglich zu dosieren.

Beispielsweise sollen mittels der Dosiereinheit exakt 10 kg an Polysiliciumbruchstücken abgewogen und dosiert werden.

Durch Trennung des Produktstroms in Grob- und Feinteile ist ein exakteres Dosieren des Polysiliciums möglich.

Diese abgewogene Menge an Polysiliciumbruchstücken wird nach dem Dosieren und einem evtl. Reinigungsschritt in wenigstens einen Folienbeutel verpackt.

Vorzugsweise umfasst die Dosiereinheit eine in die Grobdosierrinne einschwenkbare Feinanteilrutsche.

Die Dosiereinheit umfasst wenigstens ein Sieb, vorzugsweise ein Stangensieb, geeignet zur Abtrennung der Brückstücke des anfänglichen Produktstroms in eine Grobund Feindosierrinne.

Vorzugsweise umfasst die Dosiereinheit zwei Siebe, z. B. Stangensiebe.

Grobe bzw. größere Polysiliciumbruchstücke werden in einer Grobdosierrinne transportiert.

Feine bzw. kleinere Polysiliciumbruchstücke werden in einer Feindosierrinne transportiert.

Die Größenverteilung der Polysilicumbruchstücke im Ausgangsproduktstrom hängt u.a. vom vorangegangen Zerkleinerungsprozessen ab. Die Art der Aufteilung in grobe und feine Bruchstücke sowie die Größe der groben bzw. feinen Bruchstücke hängen vom gewünschten Endprodukt ab, das zu dosieren und zu verpacken ist. Eine typische Bruchgrößenverteilung umfasst Bruchstücke der Größen 50-130 mm.

Beispielsweise können Bruchstücke unterhalb einer bestimmten Größe mittels eines Siebs in Verbindung mit einer Abführrinne aus der Dosiereinheit abgeführt werden. So lässt es sich bewerkstelligen, dass nur Bruchstücke einer ganz bestimmten Größenklasse dosiert werden.

Die abgeführten kleineren Bruchstücke werden in nachgelagerten Prozessen erneut klassifiziert, dosiert und verpackt oder einer anderen Verwendung zugeführt.

Vorzugsweise umfasst die Dosiereinheit eine Feinanteilrutsche. Diese kann einschwenkbar gestaltet sein. Je nach gewünschtem Zielprodukt (Bruchgrößenverteilung) wird diese verwendet, um Feinanteile auszusieben und vom Produktstrom für die Feindosierung abzutrennen.

Die Dosierung des Polysilicums über die beiden Dosierrinnen lässt sich automatisieren.

Erfindungswesentlich ist die Verwendung von Hartmetallelementen für Sieb und Dosierwaage.

Im Gegensatz zu EP 1 334 907 B1 sind nicht alle mit Siliciumbruch in Kontakt kommenden Teile mit Silicium oder Kunststoff verkleidet.

Zumindest Sieb und Dosierwaage müssen an ihren Oberflächen wenigstens teilweise Hartmetall aufweisen.

Unter Hartmetallen versteht man gesinterte Carbidhartmetalle. Es gibt neben den konventionellen Hartmetallen auf Wolframcarbid-Basis auch Hartmetalle, die nur Titancarbid und Titannitrid als Hartstoffe beinhalten, wobei die Bindephase dabei Nickel, Kobalt und Molybdän umfasst. Auch deren Einsatz ist im Rahmen des erfindungsgemäßen Verfahrens bevorzugt.

Vorzugsweise umfassen zumindest die mechanisch beanspruchten, verschleißempfindlichen Oberflächenbereiche von Sieb und Dosierwaage Hartmetall.

Vorzugsweise ist das wenigstens eine Sieb komplett aus Hartmetall gefertigt.

Sieb und Dosierwaage können teilweise oder vollflächig mit einer Beschichtung versehen sein. Als Beschichtung wird vorzugsweise ein Material, ausgewählt aus der Gruppe bestehend aus Titannitrid, Titancarbid, Aluminiumtitannitrid und DLC (Diamond Like Carbon), verwendet.

Es hat sich gezeigt, dass die Verwendung von Hartmetallelementen die mechanische Stabilität der Dosiereinheit verbessert.

Zudem werden die Wartungsintervalle der Dosiereinheit deutlich größer, da die Hartmetallelemente weniger verschleißen als die im Stand der Technik benutzten Siliciumund Kunststoffverkleidungen.

Überraschenderweise hat sich gezeigt, dass die Kontamination von Silicium durch die Verwendung von Hartmetall sich gegenüber der Verwendung von Silicium- oder Kunststoffauskleidungen nicht signifikant erhöht. Dies betrifft insbesondere die Kontamination mit Wolfram und Kobalt.

Während DE 36 40 520 A1 zur Dosierung Rühreinrichtungen und Dosierschnecken verwendet und US 4,813,205 eine exakte Dosierung durch Abwerfen vorgefüllter Behälter zu erreichen sucht, kommt die erfindungsgemäße Dosiereinheit mit einem einfachen Linearantrieb aus.

Die erfindungsgemäße Vorrichtung ist geeignet, 10 kg Polysilicium-Bruchstücke mit einer Kantenlänge von 1 bis 150 mm und einem Gewicht von 0,1 bis 600 g mit einer Genauigkeit von +- 90g exakt zu dosieren und zu verpacken.

Die Dosiereinheit ermöglicht es weiterhin, über eine geregelte Schwenkrinne den Silicium-Produktstrom auf mehrere Dosier- und Verpackungssysteme aufzuteilen und somit eine Kombination mehrerer Dosiersysteme, die mit einem Ausgangsprodukt befüllt werden und nach Dosieren und Wägen zu unterschiedlichen Verpackungsmaschinen transportiert werden.

Das Dosiersystem beinhaltet Abtrennungsmechanismen (Siebe), die unerwünschte, kleinere, Produktgrößen absieben und diese dann den vorgelagerten Prozessen (Sieben, Klassifizieren) zuzuführen.

Die erfindungsgemäße Vorrichtung umfasst eine erste und eine zweite Verpackungseinheit, enthaltend jeweils einen Formgeber, geeignet zum Formen eines Kunststoffbeutels aus einer hochreinen Kunststofffolie, sowie jeweils eine Vorrichtung zum Verschließen des Kunststoffbeutels, wobei der Formgeber zum Formen des Kunststoffbeutels eine verschleißfeste Beschichtung aufweist.

Als verschleißfeste Beschichtung des Formgebers wird vorzugsweise ein Material, ausgewählt aus der Gruppe bestehend aus Titannitrid, Titancarbid, Aluminiumtitannitrid und DLC (Diamond Like Carbon), verwendet.

Vorzugsweise entspricht der Aufbau der erstenVerpackungseinheit prinzipiell dem Aufbau einer vertikalen Verpackungsmaschine, d.h. das Polysilicium wird von oben in einen Kunststoffbeutel eingebracht.

Vorzugsweise wird nach exakter Dosierung von Polysilicium mittels einer erfindungsgemäßen Dosiereinheit das Polysilicium vertikal in einen mittels eines Formgebers geformten Kunststoffbeutel eingebracht. Anschließend wird der Kunststoffbeutel verschlossen.

Das Einbringen des Polysiliciums sowie das Verschweißen des Kunststoffbeutels erfolgen analog zur Vorrichtung nach EP 1 334 907 B1, wobei jedoch die dort beschriebene Abfüllvorrichtung mit Silicium oder Kunststoff verkleidet ist, während der Formgeber der erfindungsgemäßen Verpackungseinheit eine verschleißfeste Beschichtung umfasst.

Eine hierfür geeignete Abfüllvorrichtung, wie in DE 10 2007 027 110 A1 beschrieben, kann auch einen frei hängenden Energieabsorber umfassen, der vor Einfüllen des polykristallinen Siliciums in den Kunststoff-Innenbeutel eingeführt wird. Über den Energieabsorber wird das polykristalline Silicium in den Kunststoffbeutel eingefüllt. Der frei hängende Energieabsorber wird anschließend aus dem mit polykristallinem Silicium gefüllten Kunststoffbeutel entfernt und der Kunststoffbeutel wird verschlossen.

Das Verschließen des ersten Kunststoffbeutels kann beispielsweise mittels Verschweißen, Verkleben oder Formschluss erfolgen. Vorzugsweise erfolgt es mittels Verschweißen.

Vorzugsweise wird vor dem Verschweißen die Luft aus dem Beutel so lange abgesaugt, bis ein flacher, luftarmer Beutel entsteht.

Vor dem Verpacken wird das Polysilicium zunächst portioniert und gewogen. Dabei erfolgt die Portionierung und Einwaage des Polysilicium-Bruchs mittels einer erfindungsgemäßen Dosiereinheit.

Der Innenbeutel besteht idealer weise aus eine Kunststofffolie, mit einer Stärke von 100₋500 µm.

Als Kunststoff wird vorzugsweise eine Monofolie aus PE-LD, PE-LLD oder PE-HD verwendet. Die Verwendung von Mehrschichtfolien aus Blasextrusion oder Gießverfahren ist ebenfalls möglich.

Der Innenbeutel wird mit einer einfachen, doppelten oder dreifachen Schweißnaht an Kopf, Boden und an der Längssiegelung versehen.

Die verschleißfeste Beschichtung des Formgebers verhindert eine Kontamination der Beutelinnenseite.

Die Erfindung sieht vor, Silicium wie üblich in zwei Beutel zu verpacken. Daher wird eine zweite Verpackungseinheit benötigt.

Erfindungsgemäß erfolgt die Verpackung mit dem zweiten Beutel in einer Verpackungseinheit mit horizontalem Aufbau.

Der zweite Kunststoffbeutel wird geformt, während mittels einer Förderrinne oder anderen geeigneten Transporteinheiten ein erster, bereits verschlossener Kunststoffbeutel enthaltend Polysilicium horizontal in den zweiten Kunststoffbeutel eingebracht wird. Anschließend wird der zweite Kunststoffbeutel verschlossen.

Durch die horizontale Verpackung können Abrieb und Durchstoßungen durch größere Silicium-Bruchstücke, wie sie bei vertikalen Verpackungsmaschinen oftmals beobachtet werden, verhindert werden.

Mittels Schlauchvorformer oder Lufteinblasung oder Folienspreizer oder - was besonders bevorzugt ist - durch deren Kombination wird eine faltenfreie Formung des Beutels erreicht.

An Stelle der Folienspreizer können auch angetriebene Kunststoffrädchen oder Metallklammern eingesetzt werden.

Der geformte und längsgesiegelte und horizontal angeordnete Folienschlauch wird vorzugsweise mittels von unten und oben angeordneten Formrohren flachgedrückt.

Nach Befüllen des Kunststoffbeutels wird dieser vorzugweise mittels zweier Formbacken verschweißt.

Bei der Verschlussvorrichtung/Verschlussstation handelt es sich vorzugsweise um eine Verschweißvorrichtung, besonders bevorzugt um ein Heißsiegelschweißgerät auf der Basis eines beheizten Schweißdrahtes, welcher vorzugsweise mit einem nichtmetallischen Werkstoff, z. B. Polytetrafluorethylen (PTFE), ummantelt ist.

Es hat sich gezeigt, dass ohne die vorgenannten Maßnahmen eine faltenfreie Quersiegelung bei großen Silicium-Bruchstücken (50-130 mm) nicht möglich ist.

Alternativ kann eine faltenfreie Schweißnaht auch durch ein Absenken des Transportbandes bzw. der Transporteinheit nach einer Querschweißbacke erreicht werden.

Dazu muss kurz vor dem Schließen der Querschweißbacke das Transportband soweit abgesenkt werden, dass der Innenbeutel im Außenbeutel bis zur bereits gefertigten Schweißnaht gleiten kann.

Dadurch wird der Folienschlauch über die Kante der Schweißbacke gezogen und eine faltenfreie Schweißnaht entsteht.

Zusätzlich kann der Außenbeutel durch die definierte Lage des Innenbeutels auch kürzer als in der oben beschriebenen Variante werden.

Der Außenbeutel besteht vorzugsweise ebenfalls aus einer der oben genannten Kunststofffolien aus Flachbahnfertigung.

Diese wird über die Sekundärverpackmaschine geformt und ebenfalls mit einfacher, doppelter oder dreifacher Schweißnaht versiegelt. Über der Schweißnaht kann auch ein Griffloch zur leichteren Entnahme aus der Verpackungsmaschine eingestanzt werden.

Die Verpackungsmaschine kann auch mit einer automatischen Regelung zur deckungsgleichen Ausrichtung der Folie für eine symmetrische Flossennaht ausgestattet sein.

Auf den Innenbeutel und auf den Außenbeutel kann ein Produktetikett appliziert werden.

Dieses Etikett kann mit Barcode oder Datamatrixcode bedruckt werden.

Der Einsatz von RFID Etiketten ist ebenfalls möglich.

Zusätzlich verfügen die Etiketten über sogenannte Anfaslaschen, mit denen Etiketten einfach entfernt werden können.

Mit dem erfindungsgemäßen Verfahren ist es erstmals möglich, große Silicium-Bruchstücke (50-130 mm) innerhalb der gewünschten Toleranzen zu dosieren.

Dies konnte durch eine Dosierstrecke, die über gravimetrische u. zeitliche Abläufe in verschiedenen Dosiermodi angesteuert wird, erreicht werden.

Als erfindungswesentlich hat es sich erwiesen, hierbei Hartmetallauskleidungen z.B. in der Dosierwaage vorzusehen.

Die Abtrennung des unerwünschten Feinmaterials mittels besonders angepasster Siebgeometrien ist besonders vorteilhaft.

Das erfindungsgemäße Verfahren ist deutlich einfacher als die Verfahren nach dem Stand der Technik.

Bislang hat man sich zur exakten Dosierung damit beholfen, vorgefüllte Behälter abzuwiegen und dann zu kombinieren. Das erfindungsgemäße Verfahren kommt dagegen mit einem einzigen Vorratsbehälter aus und bedient sich bezüglich der Dosierung der Trennung des Materials in Grob- und Feindosierproduktströme.

Rühreinrichtungen oder Dosierschnecken, wie sie im Stand der Technik teilweise verwendet wurden, werden nicht benötigt.

Die Produkt berührenden Teile aller Siebe sind vorzugsweise aus Hartmetall gefertigt.

Durch geeignete Auswahl des Hartmetalls ist die oberflächliche Produktkontamination durch Wolfram und Kobalt nicht signifikant höher als bei Silicium- oder Kunststoffauskleidungen.

Vorteilhaft ist jedoch insbesondere der geringere Verschleiß der Hartmetallteile.

Die Materialaufteilung erfolgt vorzugsweise über eine Regelung, die über volumetrische oder gravimetrische Eingangsparameter gesteuert wird.

Mit dieser Regelung ist es möglich, Produktströme konstant zuleiten und auf eine entsprechende Anzahl von Dosier- u. Verpacksystemen aufzuteilen.

Bei Produktionsstillstand wird das entsprechende Modul nicht bedient.

Die Eingangsparameter, um eine exakte Dosierung zu erreichen, sollten über einen Regelalgorithmus vorgegeben werden.

Besonders vorteilhaft am erfindungsgemäßen Verfahren ist es, dass hohe Kosteneinsparungen realisiert werden können, indem sonst unerwünschtes Feinmaterials weiter verarbeitet werden kann.

Das Verfahren ermöglicht eine exakte Dosierung des Polysiliciums mit Fehlerraten von weniger als 1%.

Durch die Härte der eingesetzten Hartmetallteile können weitere Kosteneinsparungen durch Wegfall der Wechselintervalle der siliciumarmierten Auskleidungsteile realisiert werden.

Der Außenbeutel kann faltenfrei verschweißt werden, was die Prozesssicherheit erhöht.

Die Erfindung wird im Folgenden anhand der **Figuren 1** bis **3** erläutert.
**Fig. 1** zeigt schematisch eine Vorrichtung zur exakten Dosierung und Abtrennung unerwünschter kleiner Produktgrößen.
**Fig. 2** und **3** zeigen schematisch zwei Ansichten einer horizontalen Verpackungsmaschine zur faltenfreien Folienschweißung.

### Liste der verwendeten Bezugszeichen

- **1**: Aufgaberinne
- **2**: Stangensieb zur Trennung des Material für Grob u. Feindosierung
- **3**: Hartmetallelement
- **41**: Einschwenkbare Feinanteilrutsche (je nach Zielprodukt)
- **42**: Element, um nicht abgesiebten Teil des Produktstroms in Grobdosierrinne zu leiten
- **51**: Grobdosierrinne hinten
- **52**: Feindosierrinne hinten
- **6**: wechselbare Stangensiebe zur Abtrennung unerwünschter, kleiner Produktgrößen
- **7**: Abführrinne zur Weiterverarbeitung in vorgelagerten Produktionsprozessen
- **81**: Grobdosierrinne vorne
- **82**: Feindosierrinne vorne
- **9**: Dosierwaage
- **10**: Querschweißbacke
- **11**: Folienschlauch
- **12**: Lufteinblasung
- **131**: Schlauchvorformer oben
- **132**: Schlauchvorformer unten
- **14**: Folienspreizer
- **15**: Rückstellelement
- **16**: Produkt

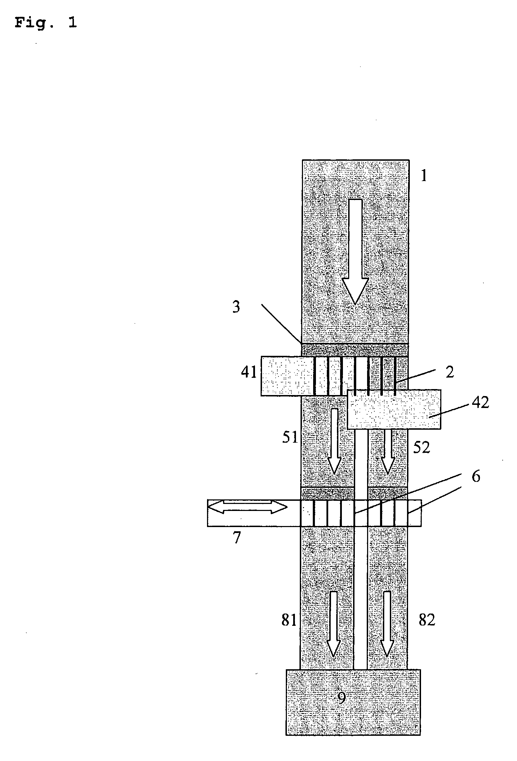

**Fig. 1** zeigt schematisch eine Vorrichtung zur exakten Dosierung und Abtrennung unerwünschter kleiner Produktgrößen.

Polysiliciumbruch, erhalten aus der Zerkleinerung von mittels des Siemens-Prozesses hergestellten Siliciumstäben, wird in Aufgaberinne **1** eingebracht.

Der Polysiliciumbruch liegt in unterschiedlichen Größenklassen von 1 bis zu 150 mm oder größer vor.

Durch Stangensieb **2** wird der Polysiliciumbruch in zwei Produktströme getrennt: in einen Produktstrom mit kleineren bzw. leichteren Bruchstücken zur Feindosierung und in einen Produktstrom mit größeren bzw. schwereren Bruchstücken zur Grobdosierung. Stangensieb **2** besteht aus Hartmetall.
**3** zeigt ein Hartmetallelement.
**41** zeigt eine optionale Feinanteilrutsche, die einschwenkbar ist. Je nach gewünschtem Zielprodukt (Bruchgrößenverteilung) wird diese verwendet, um Feinanteile auszusieben und vom Produktstrom für die Feindosierung abzutrennen.
**42** zeigt ein Element, um den nicht ausgesiebten Teil des Produktstroms in die Grobdosierrinne **51** zu leiten.
**51** zeigt einen hinteren Teil der Grobdosierrinne, in dem sich der Produktstrom zur Grobdosierung bewegt.
**52** zeigt den hinteren Teil der Feindosierrinne.
**6** zeigt Stangensiebe zur Abtrennung unerwünschter, kleinerer Bruchgrößen.
**7** zeigt eine Abführrinne, um den mittels Stangensieb **6** abgetrennte kleinere Bruchgrößen abzutransportieren. Diese kleineren Bruchgrößen können weiterverarbeitet werden.
**81** zeigt den vorderen Teil der Grobdosierrinne, **82** den vorderen Teil der Feindosierrinne.
**9** zeigt eine Dosierwaage.

Mittels der Dosierwaage wird der durch Dosierrinnen transportierte Polysiliciumbruch abgewogen, z.B. auf das Zielgewicht 10 kg.

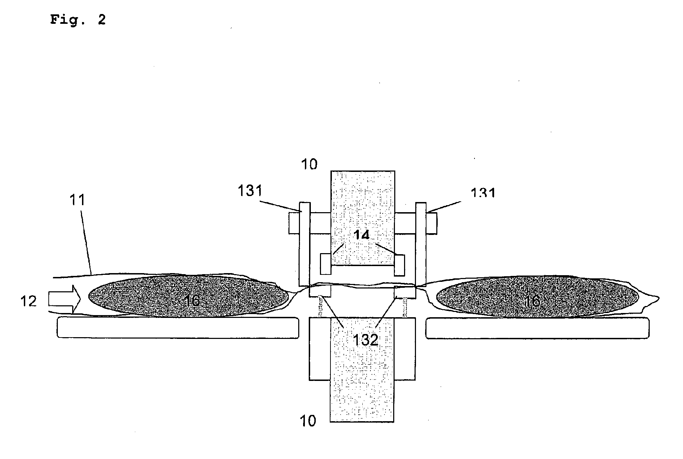

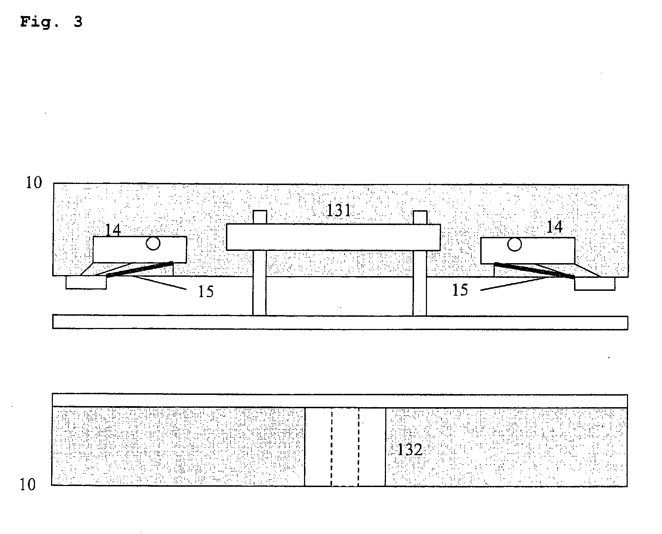

**Fig. 2** und **3** zeigen schematisch zwei Ansichten einer horizontalen Verpackungsmaschine zur faltenfreien Folienschweißung.
**10** zeigt eine Querschweißbacke innerhalb einer Verpackungsmaschine zum Verschließen von Polysiliciumbruch in Kunststofffolien.
**11** zeigt einen Folienschlauch.

Der Folienschlauch wird mittels oberen Schlauchvorformers **131** und mittels unteren Schlauchvorformers **132** in die gewünschte Form gebracht.
**14** zeigt einen Folienspreizer.

Der Folienschlauch wird über Lufteinblasung **12** aufgeblasen.
**15** zeigt ein Rückstellelement (z.B. Feder) zum Zurückstellen des Folienspreizers.
**16** stellt das zu verpackende Produkt dar.

## Patentansprüche

1. Vorrichtung zum Dosieren und Verpacken von Polysiliciumbruchstücken enthaltend
a) eine Dosiereinheit für eine Vorrichtung zum Dosieren von Polysiliciumbruchstücken, umfassend eine Förderrinne, geeignet zum Befördern eines Produktstroms an Polysiliciumbruchstücken, wenigstens ein Sieb, geeignet zur Trennung des Produktstroms in grobe und feine Polysiliciumbruchstücke, eine Grobdosierrinne für grobe Polysiliciumbruchstücke und eine Feindosierrinne für feine Polysiliciumbruchstücke, eine Dosierwaage zur Bestimmung des Dosiergewichts, wobei das wenigstens eine Sieb und die Dosierwaage an ihren Oberflächen wenigstens teilweise ein Hartmetall umfassen;
b) eine erste Verpackungseinheit, , enthaltend einen Formgeber, geeignet zum Formen eines ersten Kunststoffbeutels aus einer hochreinen Kunststofffolie, sowie eine Vorrichtung zum Verschließen des ersten Kunststoffbeutel;
c) eine zweite Verpackungseinheit, enthaltend einen Formgeber, geeignet zum Formen eines zweiten Kunststoffbeutels aus einer hochreinen Kunststofffolie, sowie eine Vorrichtung zum Verschließen des zweiten Kunststoffbeutels;
wobei der Formgeber zum Formen des ersten und des zweiten Kunststoffbeutels jeweils eine verschleißfeste Beschichtung aufweist;
wobei die verschleißfeste Beschichtung des Formgebers jeweils ausgewählt wird aus der Gruppe bestehend aus Titannitrid, Titancarbid, Aluminiumtitannitrid und DLC;
und wobei die erste Verpackungseinheit so angeordnet ist, dass die zu verpackenden Polysiliciumbruchstücke vertikal in den ersten geformten Kunststoffbeutel eingefüllt werden können;
und wobei die zweite Verpackungseinheit so angeordnet ist, dass der erste, verschlossene Kunststoffbeutel mit darin verpackten Polysiliciumbruchstücken horizontal in den zweiten geformten Kunststoffbeutel eingebracht werden kann.

2. Vorrichtung nach Anspruch 1, wobei die Dosiereinheit wenigstens eine Abführrinne, um Polysiliciumbruchstücke aus der Dosiereinheit abzuführen, umfasst.

3. Vorrichtung nach Anspruch 1 oder nach Anspruch 2, enthaltend einen Schlauchvorformer, einen Folienspreizer oder eine Vorrichtung, geeignet zum Einblasen von Luft in den zweiten Kunststoffbeutel, oder eine Kombination jener drei Elemente, zur faltenfreien Formung des zweiten Kunststoffbeutels.

4. Vorrichtung nach einem der Ansprüche 1 bis 3, wobei es sich bei der Vorrichtung zum Verschließen des Kunststoffbeutels jeweils um eine Verschweißvorrichtung handelt.

5. Verfahren zum Dosieren und Verpacken von Polysiliciumbruchstücken, wobei ein Produktstrom an Polysiliciumbruchstücken über eine Förderrinne transportiert, mittels wenigstens einen Siebs in grobe und feine Bruchstücke getrennt, mittels einer Dosierwaage abgewogen und auf ein Zielgewicht dosiert wird, über eine Abführrinne abgeführt und zu einer ersten Verpackungseinheit transportiert wird, wo die Polysiliciuimbruchstücke vertikal in einen ersten, mittels eines Formgebers geformten Kunststoffbeutel gefüllt werden und dieser verschlossen wird, wobei dieser erste Kunststoffbeutel enthaltend Polysiliciumbruchstücke in einer zweiten Verpackungseinheit horizontal in einen zweiten, mittels eines Formgebers geformten Kunststoffbeutel verpackt wird, der anschließend verschweißt wird, wobei das wenigstens eine Sieb und die Dosierwaage an ihren Oberflächen wenigstens teilweise ein Hartmetall umfassen und der Formgeber zum Formen des ersten und des zweiten Kunststoffbeutels jeweils eine verschleißfeste Beschichtung aufweisen, wobei die verschleißfeste Beschichtung des Formgebers jeweils ausgewählt wird aus der Gruppe bestehend aus Titannitrid, Titancarbid, Aluminiumtitannitrid und DLC.

6. Verfahren nach Anspruch 5, wobei zur faltenfreien Formung des zweiten Kunststoffbeutels ein Schlauchvorformer, ein Folienspreizer oder eine Vorrichtung, geeignet zum Einblasen von Luft in den zweiten Kunststoffbeutel, oder eine Kombination jener drei Elemente zum Einsatz kommen.

7. Verfahren nach Anspruch 5 oder nach Anspruch 6, wobei in dem Produktstrom an Polysiliciumbruchstücken enthaltendes feines Material, das nicht verpackt werden soll, mittels Sieben vom Produktstrom abgetrennt und in Produktionsprozessen weiterverarbeitet wird.

8. Verfahren nach einem der Ansprüche 5 bis 7, wobei der geformte und horizontal angeordnete Folienschlauch mittels von unten und oben angeordneten Formrohren flachgedrückt wird.

9. Verfahren nach einem der Ansprüche 5 bis 8, wobei der zweite Kunststoffbeutel auf einem Transportband mittels zweier Schweißbacken verschweißt wird, wobei das Transportband abgesenkt wird, bis der erste Kunststoffbeutel im zweiten Kunststoffbeutel bis zu einer bereits gefertigten Schweißnaht gleitet und dann die Schweißbacken geschlossen werden.

## Claims

1. Device for dosing and packaging polysilicon chunks containing
a) a dosing unit for a device for dosing polysilicon chunks, comprising a feed channel suitable for delivering a product flow of polysilicon chunks, at least one screen suitable for separating the product flow into coarse and fine polysilicon chunks, a coarse dosing channel for coarse polysilicon chunks and a fine dosing channel for fine polysilicon chunks, and a dosing balance for determining the dosing weight, wherein the at least one screen and the dosing balance at least partially comprise a hard metal on their surfaces;
b) a first packaging unit containing a shaper suitable for forming a first plastic bag from a high-purity plastic film, and a device for sealing the first plastic bag;
c) a second packaging unit containing a shaper suitable for forming a second plastic bag from a high-purity plastic film, and a device for sealing the second plastic bag;
wherein each shaper for forming the first and second plastic bag comprises a wear-resistant coating;
wherein the wear-resistant coating of each shaper is selected from the group consisting of titanium nitride, titanium carbide, aluminium titanium nitride and DLC;
and wherein the first packaging unit is arranged such that the polysilicon chunks to be packaged can be introduced vertically into the first shaped plastic bag;
and wherein the second packaging unit is arranged such that the first, sealed plastic bag with polysilicon chunks packaged therein can be introduced horizontally into the second shaped plastic bag.

2. Device according to Claim 1, wherein the dosing unit comprises at least one discharge channel for discharging polysilicon chunks from the dosing unit.

3. Device according to Claim 1 or according to Claim 2, containing a tube preformer, a film spreader or a device suitable for blowing air into the second plastic bag, or a combination of those three elements, for fold-free forming of the second plastic bag.

4. Device according to one of Claims 1 to 3, wherein each device for sealing the plastic bag is a welding device.

5. Method for dosing and packaging polysilicon chunks, wherein a product flow of polysilicon chunks is transported via a feed channel, separated by means of at least one screen into coarse and fine chunks, weighed and dosed to a target weight by means of a dosing balance, discharged via a discharge channel and transported to a first packaging unit where a first plastic bag formed by means of a shaper is filled vertically with the polysilicon chunks and sealed, wherein this first plastic bag containing polysilicon chunks is packaged horizontally, in a second packaging unit, into a second plastic bag which is formed by means of a shaper and is subsequently welded, wherein the at least one screen and the dosing balance at least partially comprise a hard metal on their surfaces and each shaper for forming the first and the second plastic bag comprises a wear-resistant coating, wherein the wear-resistant coating of each shaper is selected from the group consisting of titanium nitride, titanium carbide, aluminium titanium nitride and DLC.

6. Method according to Claim 5, wherein a tube preformer, a film spreader or a device suitable for blowing air into the second plastic bag, or a combination of those three elements, are used for fold-free forming of the second plastic bag.

7. Method according to Claim 5 or according to Claim 6, wherein fine material which is containing in the product flow of polysilicon chunks and is not intended to be packaged is separated from the product flow by means of screening and processed further in production processes.

8. Method according to one of Claims 5 to 7, wherein the shaped and horizontally arranged film tube is pressed flat by means of shaping tubes arranged below and above.

9. Method according to one of Claims 5 to 8, wherein the second plastic bag is welded on a conveyor belt by means of two welding jaws, wherein the conveyor belt is lowered until the first plastic bag slides in the second plastic bag as far as an already formed weld seam, and then the welding jaws are closed.

## Revendications

1. Dispositif destiné à l'introduction dosée et à l'emballage de fragments de polysilicium, comportant
a) une unité doseuse pour un dispositif destiné à l'introduction dosée de fragments de polysilicium, comprenant une goulotte de transport, appropriée au transport d'un courant de produit consistant en fragments de polysilicium, au moins un tamis, approprié au fractionnement du courant de produit en gros fragments et fragments fins de polysilicium, une goulotte doseuse de gros fragments pour gros fragments de polysilicium et une goulotte doseuse de fragments fins pour fragments fins de polysilicium, une balance doseuse pour la détermination du poids de la quantité dosée, l'au moins un tamis et la balance doseuse comprenant à leurs surfaces au moins en partie un métal dur ;
b) une première unité d'emballage, comportant un outil de formage, approprié à la mise en forme d'un premier sac en matière plastique à partir d'un film en matière plastique très pur, ainsi qu'un dispositif destiné à la fermeture du premier sac en matière plastique ;
c) une deuxième unité d'emballage, comportant un outil de formage, approprié à la mise en forme d'un deuxième sac en matière plastique à partir d'un film en matière plastique très pur, ainsi qu'un dispositif destiné à la fermeture du deuxième sac en matière plastique ;
les outils de formage destinés à la mise en forme du premier et du deuxième sac en matière plastique comportant chacun un revêtement anti-usure ;
le revêtement anti-usure de l'outil de formage étant choisi dans chaque cas dans le groupe constitué par le nitrure de titane, le carbure de titane, le nitrure de titane et d'aluminium et le DLC ;
et la première unité d'emballage étant disposée d'une façon telle que les fragments de polysilicium à emballer peuvent être introduits verticalement dans le premier sac en matière plastique mis en forme ;
et la deuxième unité d'emballage étant disposée d'une façon telle que le premier sac en matière plastique fermé avec les fragments de polysilicium emballés dans celui-ci peut être introduit horizontalement dans le deuxième sac en matière plastique mis en forme.

2. Dispositif selon la revendication 1, dans lequel l'unité doseuse comprend au moins une goulotte de sortie, pour faire sortir les fragments de polysilicium de l'unité doseuse.

3. Dispositif selon la revendication 1 ou selon la revendication 2, comportant un outil de préformage de tube souple, un écarteur de film ou un dispositif approprié au soufflage d'air dans le deuxième sac en matière plastique, ou une combinaison de ces trois éléments, pour la mise en forme sans plis du deuxième sac en matière plastique.

4. Dispositif selon l'une quelconque des revendications 1 à 3, dans lequel le dispositif destiné à la fermeture du sac en matière plastique consiste chaque fois en un dispositif de soudage.

5. Procédé pour l'introduction dosée et l'emballage de fragments de polysilicium, dans lequel un courant de produit consistant en fragments de polysilicium est transporté via une goulotte de transport, fractionné au moyen d'au moins un tamis en gros fragments et fragments fins, pesé au moyen d'une balance doseuse et dosé à un poids souhaité, évacué via une goulotte d'évacuation et amené à une première unité d'emballage, où les fragments de polysilicium sont introduits verticalement dans un premier sac en matière plastique mis en forme au moyen d'un outil de formage et ce sac est fermé, ce premier sac en matière plastique contenant des fragments de polysilicium étant, dans une deuxième unité d'emballage, emballé horizontalement dans un deuxième sac en matière plastique, mis en forme au moyen d'un outil de formage, qui est ensuite soudé, l'au moins un tamis et la balance doseuse comprenant à leurs surfaces au moins en partie un métal dur et les outils de formage destinés à la mise en forme du premier et du deuxième sac en matière plastique comportant chacun un revêtement anti-usure, le revêtement anti-usure de l'outil de formage étant choisi dans chaque cas dans le groupe constitué par le nitrure de titane, le carbure de titane, le nitrure de titane et d'aluminium et le DLC.

6. Procédé selon la revendication 5, dans lequel on utilise pour la mise en forme sans plis du deuxième sac en matière plastique un outil de préformage de tube souple, un écarteur de film ou un dispositif approprié au soufflage d'air dans le deuxième sac en matière plastique, ou une combinaison de ces trois éléments.

7. Procédé selon la revendication 5 ou selon la revendication 6, dans lequel du matériau fin contenu dans le courant de produit consistant en fragments de polysilicium, qui ne doit pas être emballé, est séparé par tamisage du courant de produit et transformé dans des processus de production.

8. Procédé selon l'une quelconque des revendications 5 à 7, dans lequel le tube souple en film mis en forme et disposé horizontalement est aplati au moyen de tubes de formage placés en bas et en haut.

9. Procédé selon l'une quelconque des revendications 5 à 8, dans lequel le deuxième sac en matière plastique est soudé sur une bande transporteuse au moyen de deux mâchoires de soudage, la bande transporteuse étant abaissée jusqu'à ce que le premier sac en matière plastique passe dans le deuxième sac en matière plastique jusqu'à un joint de soudure déjà réalisé et ensuite les mâchoires de soudage sont fermées.
